Europäisches Patentamt

European Patent Office

Office européen des brevets

(11) Veröffentlichungsnummer: **0 005 817**
**A1**

(12) # EUROPÄISCHE PATENTANMELDUNG

(21) Anmeldenummer: **79101637.1**

(22) Anmeldetag: **29.05.79**

(51) Int. Cl.²: **G 03 B 23/02**

(30) Priorität: **07.06.78 DE 2824879**

(43) Veröffentlichungstag der Anmeldung:
**12.12.79 Patentblatt 79/25**

(84) Benannte Vertragsstaaten:
**AT BE FR GB IT LU NL**

(71) Anmelder: **Rollei-Werke Franke & Heidecke GmbH + CoKG**
**Salzdahlumer Strasse 196**
**D-3300 Braunschweig(DE)**

(72) Erfinder: **Stiller, Armin**
**Enzianweg 3**
**D-3300 Braunschweig(DE)**

(72) Erfinder: **Sobotta, Reinhard, Ing. grad.**
**Schreiberkamp 9**
**D-3300 Braunschweig(DE)**

(74) Vertreter: **Pretzell, Hellmut, Dipl.-Ing.**
**Salzdahlumer Strasse 196**
**D-3300 Braunschweig(DE)**

(54) Stehbild-Projektor.

(57) Bei Stehbildprojektoren können sowohl die Standzeit als auch bei Überblendprojektoren die Überblendzeit der zu projizierenden Dias automatisch variiert werden. An der Magazinführung (12) sind Kontakte (20) angebracht, die durch Kurzschlußstücke (21) an einer Magazinwand (31) kurzgeschlossen werden. Aus dem Widerstandswert der zu diesen Kurzschlußstücken (21) gehörenden Widerstände im Innern des Projektors ergibt sich die Stand- bzw. Überblendzeit.

EP 0 005 817 A1

/...

Croydon Printing Company Ltd.

Fig. 1

Fig. 4

0005817

ROLLEI - WERKE
Franke & Heidecke
Braunschweig

A 1127 Eu                                    04.05.1979

## Stehbild-Projektor

Die Erfindung betrifft einen Stehbild-Projektor mit einem zu projizierende Dias enthaltenden Magazin, mit einer das Magazin aufnehmenden Magazinführung und mit mindestens einem Zeitbildungsglied zum Bestimmen der Projektionszeit der Dias und/oder der Überblendzeit beim Diawechsel.

Bei solchen Stehbild-Projektoren ist es vielfach erwünscht, nicht alle Dias mit gleicher Projektionszeit und/oder Überblendzeit vorzuführen, sondern mit einer dem Bildmotiv individuell angepaßten Projektionszeit und/oder Überblendzeit. Unter Projektionszeit wird dabei die Standzeit des Dias in der Bildbühne verstanden, also die Zeit, während der das Dia auf den Bildschirm projiziert wird. Die bei sogenannten Überblendprojektoren auftretende Überblendzeit ist diejenige Zeit, die der Überblendvorgang von einem projizierten Dia auf das nächstfolgende benötigt. Man unterscheidet hierbei die sogenannte harte Überblendung, bei welcher der Überblendvorgang schlagartig erfolgt, und die sogeannte weiche Überblendung, bei welcher sich der Überblendvorgang relativ langsam abspielt und für längere Zeit zwei ineinander projizierte Dias zu sehen sind.

0005817

Während die Projektionszeit relativ einfach von dem Vorführenden durch Fernbedienung entsprechend dem jeweiligen Dia individuell bestimmt werden kann, ist dieses bei der Überblendzeit schon wesentlich komplizierter. In beiden Fällen erfordert aber die während der Vorführung von dem Vorführenden durchgeführte individuelle Anpassung der Projektionszeit und/oder der Überblendzeit die ungeteilte Aufmerksamkeit und Konzentration des Vorführenden ausschließlich für den Zeitbestimmungsvorgang. Ein Vortrag des Vorführenden ist hierbei nicht mehr möglich. Auch lassen sich Fehler in der Bestimmung der Projektionszeit und/oder Überblendzeit nicht sicher vermeiden, was eine gut vorbereitete und gut vorgeführte Diaschau empfindlich stören kann.

Bei einem bekannten Stehbild-Projektor der eingangs genannten Art hat man diese Nachteile dadurch vermieden, daß die individuell an vorzuführende Dias angepaßte unterschiedliche Projektionszeit selbsttätig, d. h. unabhängig von dem Vorführenden, eingestellt wird. Hierzu hat man bei dem bekannten Projektor an der aus dem Magazin herausstehenden Überseite der Dias Nocken angebracht, die entsprechend der gewünschten Projektionsdauer eine bestimmte Position am Dia einnehmen. Im Projektor selbst ist ein Abtastglied vorgesehen, das mit dem Zeitbildungsglied zusammenwirkt. Beim Einführen des Dias in die Bildbühne tastet dieses Abtastglied die Stellung des Nockens am Dia ab und stellt das Zeitbildungsglied entsprechend der durch die Nockenstellung gewünschten Projektionszeit ein.

Der Nachteil eines solchen bekannten Projektors liegt darin, daß bei Dias mit handelsüblicher Rahmung die Befestigung von solchen Positionsnocken zur Festlegung der Projektionszeit am Diarahmen nicht oder nur sehr schwer möglich ist. Die Befestigung dieser Nocken am Diarahmen muß variabel und relativ fest sein, da das Abtastglied eine gewisse Kraft beim Abtasten der Nockenstellung auf den Nocken ausübt. Selbst wenn eine solche Befestigung der Nocken an einem handelsüblichen Diarahmen gelänge, ist es für den Benutzer unmöglich, die richtige Projektionszeit für das Dia festzulegen, da jegliche als Projektionszeit geeichte Markierung am Dia fehlt. Er weiß letztlich nicht, welche Projektionszeit sein am Dia befestigter Nocken im Projektor auslöst. Bei dem bekannten Diaprojektor müssen also Spezial-Diarahmen verwendet werden, soll eine solche vorprogrammierte Diaschau durchgeführt werden. Dies bedeutet aber, daß vorhandene - üblicherweise gerahmte - Diapositive aus ihren Diarahmen herausgelöst und in die Spezial-Diarahmen eingesetzt werden müssen. Dadurch erfordert eine solche programmierte Diaschau eine beträchtliche Vorbereitungszeit.

Diese bei dem bekannten Projektor angewendete Art der automatischen individuellen Projektionszeitbestimmung der einzelnen Dias ist zur Bestimmung der Überblendzeit beim Diawechselvorgang wenig geeignet, da sich hier immer zwei Dias gleichzeitig in den beiden vorhandenen Bildbühnen befinden. Der ohnehin bereits nicht unbeträchtliche Aufwand an mechanischen Steuermitteln zur Abtastung des Nockens am Diarahmen müßte sich bei einem Überblend-Projektor verdoppeln, da gleichzeitig an zwei Dias die Nockenstellung abgetastet werden muß. Zusätzlich ist noch eine aufwendige elektronische Auswahlschaltung erforderlich, die dafür Sorge trägt, daß bei jedem Überblendvorgang nur eines der beiden Dias die Überblendzeit bestimmt.

- 4 -

0005817

Es sind auch schon Arbeitstaktsteuerungen für den Diawechsel in Diaprojektoren bekannt geworden, bei denen durch ein Auslöseglied die Diawechseleinrichtung mit einem motorischen Antriebsorgan wahlweise verbindbar ist. Dabei schaltet die Arbeitstaktsteuerung selbsttätig beliebig einstellbare Standzeiten für die Diapositive.

Weiterhin können bei derartigen Arbeitstaktsteuerungen die für die einzelnen Dias vorgesehenen Standzeiten gespeichert in den Projektor eingegeben werden und entsprechend dem Speicher nacheinander durch Auslösegliedbetätigungen abgerufen werden. Dies wird durch die Anordnung von durch ein Programmraster oder dergleichen betätigbaren Abtastkontakten und mit diesen verbundenen Schaltkontakten für einen beim Diawechsel aus einer Ausgangsstellung nacheinander über diesen laufenden Arbeitskontakt im Stromkreis des Auslösegliedes für den Diawechsel erreicht. Dadurch sind zwei im Stromkreis des Auslösegliedes hintereinander liegende Unterbrecherstellen geschaffen, von denen eine durch das Programmraster und die andere durch das Zusammenwirken der Schaltkontakte mit dem Arbeitskontakt entsprechend den beim Ablauf der Ausgangsstellung notwendigen Zeitintervallen geschlossen wird.

Bei derartigen Arbeitstaktsteuerungen sind die Programmraster entweder unmittelbar am Magazin oder an einem unabhängigen Programmträger, z. B. einer Lochkarte, im Magazindeckel oder dergleichen angeordnet.

- 5 -

0005817

Diese bekannten an Magazinen angeordneten Programmraster und die durch sie gesteuerten Arbeitstaktsteuerungen haben aber den Nachteil, daß noch ein relativ hoher mechanischer Aufwand bezüglich der Abgreifkontakte und Taktsteuerelemente getrieben werden muß. So weisen die Taktsteuerelemente Wellen, Schalträder, Spiralfedern, Sperrklinken und Schneckenantriebe auf, die eine kompakte Bauweise und eine sichere Funktionsweise infrage stellen. Auch hier gilt das schon oben Gesagte, daß diese bekannte Art der automatischen Projektionszeitbestimmung der einzelnen Dias zur Bestimmung der Überblendzeit beim Diawechselvorgang in Überblendprojektoren sehr ungeeignet ist. Der ohnehin schon hohe mechanische Aufwand würde sich dadurch noch vervielfachen.

Der Erfindung liegt daher die Aufgabe zugrunde, einen Stehbild-Projektor der eingangs genannten Art zu schafen, bei welchem die Projektionszeit und/oder Überblendzeit für jedes Dia individuell nach einem festgelegten Programm automatisch elektronisch steuerbar ist, wobei Dias mit handelsüblicher Rahmung problemlos verwendet werden können und bei welchen darüber hinaus der mechanische technische Aufwand und auch der zeitliche Aufwand zur Programmierung einer Diaschau vergleichsweise gering ist.

Diese Aufgabe ist gemäß der Erfindung bei einem Stehbild-Projektor der eingangs genannten Art dadurch gelöst, daß an einer dem Magazin unmittelbar zugekehrten Wand der Magazinführung mit dem Zeitbildungsglied verbundene elek-

- 6 -

0005817

trische Kontakte vorgesehen sind, daß am Magazin bei Magazintransport aufeinanderfolgend die Kontakte betätigende Schaltelemente vorgesehen sind, und daß die Schaltelemente den Magazinfächern derart zugeordnet sind, daß durch Betätigen mindestens eines Kontaktes durch ein Schaltelement die für das in dem diesem Schaltelement zugeordneten Magazinfach enthaltene Dia gewählte Projektions- und/oder Überblendzeit in dem Zeitbildungsglied eingestellt wird.

Durch diese Maßnahmen wird eine technisch sehr einfache Steuervorrichtung zur automatischen Steuerung der vorgegebenen individuellen Projektions- und/oder Überblendzeit der Dias geschaffen. Es müssen lediglich Kontakte an dem Magazin vorgesehen, eine elektrische Verbindung zu dem Zeitbildungsglied hergestellt und entsprechende, die Kontakte betätigende Schaltelemente an den einzelnen Magazinfächern in der gewünschten Projektions- bzw. Überblendzeit entsprechender räumlicher Anordnung aufgebracht werden. Da das einzelne Diafach im Diamagazin die Projektionszeit und/oder Überblendzeit bestimmt, können in handelsüblichen Diarahmen gehaltene Diapositive verwendet werden. Spezialrahmen sind überflüssig. Wenige Diamagazine genügen, um eine große Anzahl von Dias in einer hinsichtlich der individuellen Projektions- und/oder Überblendzeit der Einzeldias vorprogrammierten Diaschau vorzuführen. Selbst wenn zur Vereinfachung der Programmierarbeit Spezial-Diamagazine mit in Zeiteinheiten geeichten Markierungen verwendet würden, wäre somit der finanzielle Aufwand zur Vorführung einer sehr großen Anzahl von Dias ungleich geringer als bei dem bekannten Projektor mit individueller Markierung der einzelnen Diarahmen.

Die Überblendzeit kann ebenso wie die Projektionszeit mit gleich geringem Aufwand vorprogrammiert und bei der Diaschau automatisch abgerufen werden. Auch hierfür sind lediglich mit dem Zeitbildungsglied für die Überblendzeit verbundene Kontakte an der Magazinführungswand und entsprechende Schaltelemente am Magazin erforderlich. Bei gleichzeitiger Programmierung von Projektionszeit und Überblendzeit ist eine Anzahl der Kontakte mit dem Zeitbildungsglied für die Projektionszeit und eine weitere Anzahl der Kontakte mit dem Zeitbildungsglied für die Überblendzeit elektrisch zu verbinden. Der technische Aufwand für die entsprechenden Steuerungen ist in jedem Fall äußerst gering.

Weitere erfindungswesentliche Ausgestaltungen und Weiterbildungen der Erfindung sind Gegenstand der Unteransprüche, auf die hier ausdrücklich Bezug genommen wird.

Die Erfindung ist anhand von in der Zeichnung dargestellten Ausführungsbeispielen nachstehend näher erläutert. Dabei zeigen:

Fig. 1                    einen Ausschnitt eines Projektors gemäß einem ersten Ausführungsbeispiel in perspektivischer Darstellung

Fig. 2                    einen vergrößerten Ausschnitt des Projektors in Fig. 1,

- 8 -                                          0005817

Fig. 3                        einen Schaltplan des Zeitbildungsgliedes des Projektors in
                              Fig. 1 und 2,

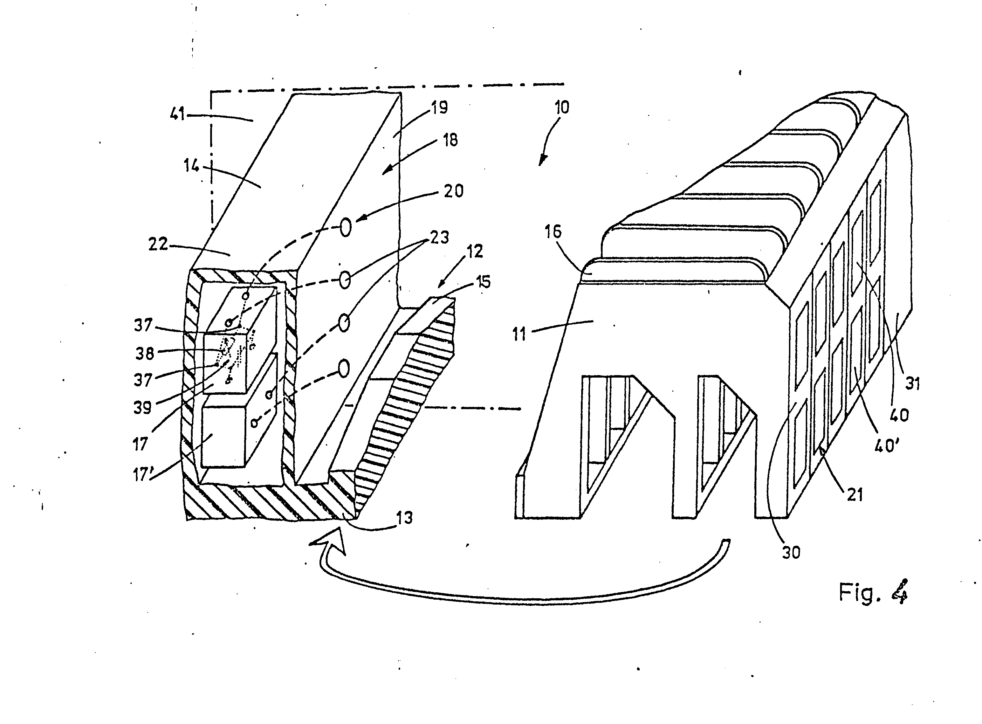

Fig. 4                        einen Ausschnitt eines Projek-
                              tors gemäß einem zweiten Aus-
                              führungsbeispiel in perspekti-
                              vischer Darstellung.

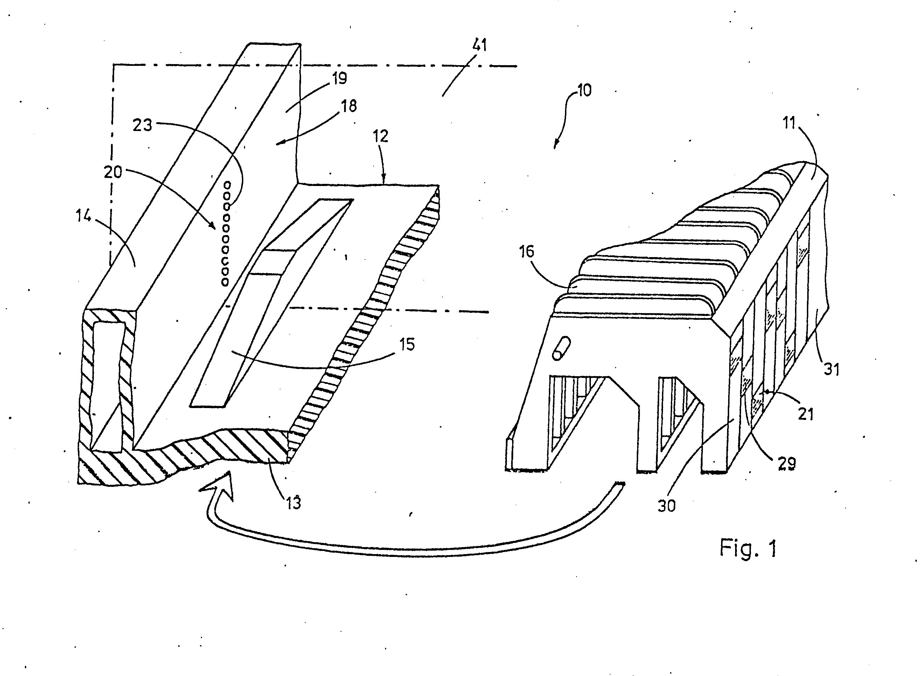

Die Stehbild-Projektoren 10 gemäß den Fig. 1-4 weisen alle ein Magazin 11 zur Aufnahme von Dias und eine das Magazin aufnehmende Magazinführung 12 auf. In den Fig. 1-4
sind von den Projektoren 10 nur die zum Verständis der Erfindung erforderlichen Teile gezeichnet. Das in den Figuren
rechts von der Magazinführung 12 liegende Projektorgehäuse,
das eine oder mehrere Projektionslampen, die Diabühnen und
den gesamten Magazinantrieb und Diawechselmechanismus enthält, ist weggelassen. Insoweit die Ausführungsbeispiele
der Stehbild-Projektoren 10 übereinstimmen, sind gleiche
Teile mit gleichen Bezugszeichen versehen.

Die Magazinführung 12 zur Aufnahme des Magazins 11 wird
von der Grundplatte 13 des Projektors 10, von der Seitenwand 14 und von der der Magazinführung 12 zugewandten Seitenwand des nicht dargestellten Projektorgehäuses gebildet. Deutlich zu erkennen ist in der Magazinführung die
sog. Anheberampe 15, die bei Verwendung des sog. in den
Fig. 1 und 5 dargestellten Einheitsmagazins erforderlich
ist, um die Dias aus dem Magazin 11 in die Bildbühne und
umgekehrt zu verbringen.

In den Fig. 1 und 5 ist der übersichtlichen Darstellung halber das Magazin 11 aus der Magazinführung 12 des Projektors 10 herausgezogen. Das Magazin 11 kann nur in Richtung des in diesen Fig. eingezeichneten Pfeils in die Magazinführung 12 eingeschoben werden. Das Magazin 11 weist eine Vielzahl von in Achsrichtung hintereinander liegenden Magazinfächern 16 auf, die jeweils ein nicht dargestelltes Dia aufnehmen.

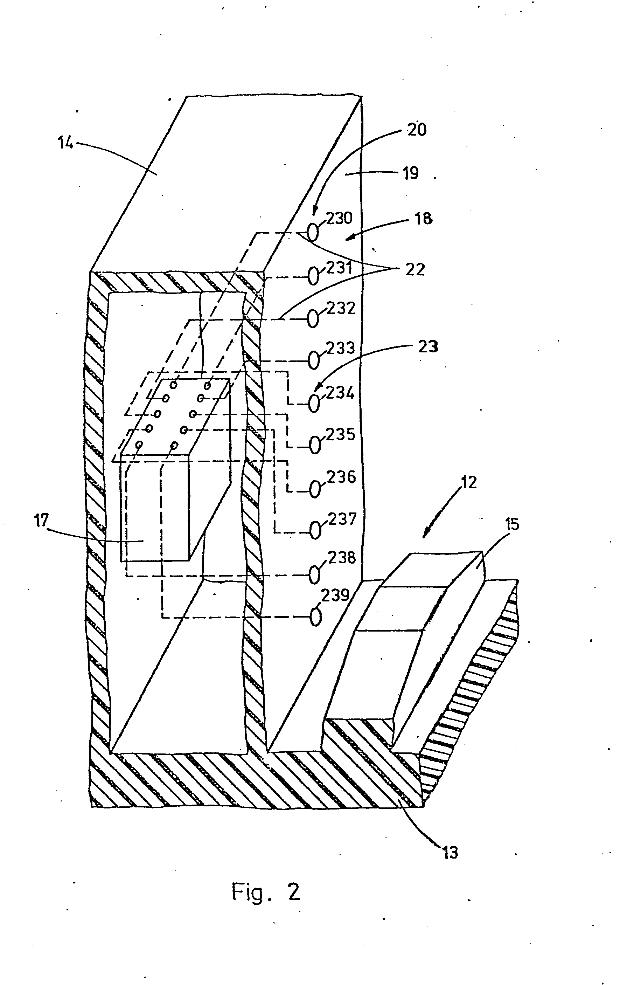

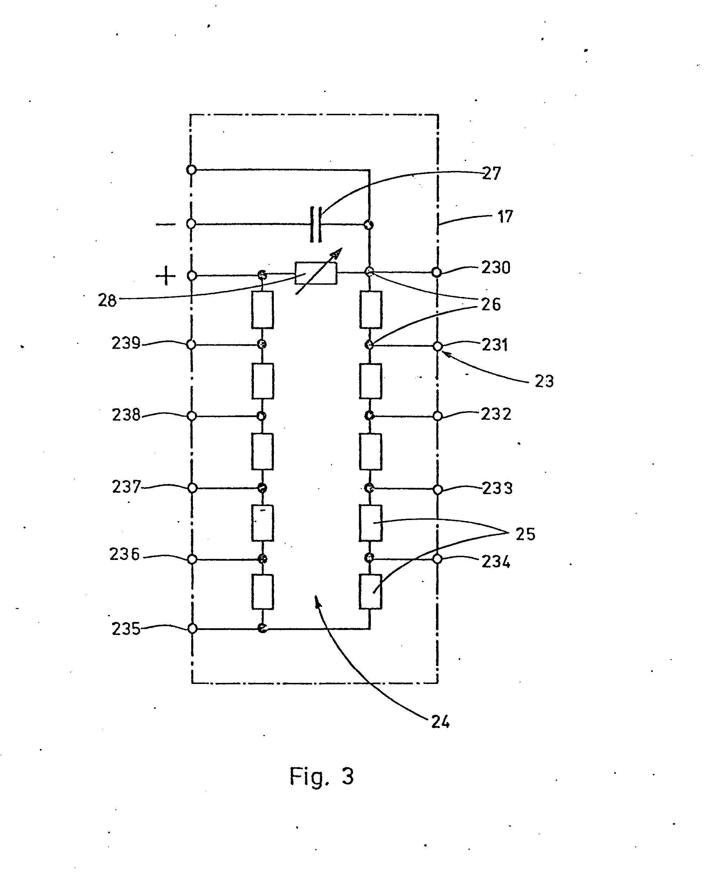

Zum Bestimmen der Projektionszeit eines Dias und/oder der Überblendzeit beim Diawechsel hat jeder Projektor 10 mindestens ein Zeitbildungsglied 17 (Fig. 2 und 3). Vorteilhaft ist dabei ein gesondertes Zeitbildungsglied 17 für die Bestimmung der Projektionsdauer eines Dias und ein gesondertes Zeitbildungsglied 17' (Fig. 5) für das Steuern der Überblendzeit vorgesehen. Das Zeitbildungsglied 17 bzw. 17' ist mit weiteren elektrischen Bauelementen zur Steuerung des Projektors in der vorzugsweise hohl ausgebildeten Seitenwand 14 des Projektors untergebracht (Fig. 2 und 5).

Mit dem Zeitbildungsglied 17 bzw. 17' sind elektrische Kontakte 20 verbunden, die an einer dem Magazin 11 unmittelbar zugekehrten Wand 18 der Magazinführung 12 angeordnet sind. Diese Wand 18 wird in den Ausführungsbeispielen von der die Magazinführung begrenzenden Innenfläche 19 der Seitenwand 14 des Projektors 10 gebildet. Am Magazin 11 sind Schaltelemente 21 vorgesehen, die beim schrittweisen Transport des Magazins 11 durch die Magazinführung 12 hindurch aufeinanderfolgend die Kon-

takte 20 betätigen. Dabei sind die Schaltelemente 21 den Magazinfächern 16 derart zugeordnet, daß durch Betätigen mindestens eines der Kontakte 20 durch ein Schaltelement 21 die gewünschte Projektions- bzw. Überblendzeit desjenigen Dias, das sich in dem diesem Schaltelement 21 zugeordneten Magazinfach 16 befindet, in dem Zeitbildungsglied 17 bzw. 17' eingestellt wird. Bei den Ausführungsbeispielen gemäß den Fig. 1-3 weist das Zeitbildungsglied 17 eine Vielzahl von Zeitstufen auf, die mit den Kontakten 20 über von den Eingängen der einzelnen Zeitstufen zu den Kontakten 20 führende elektrische Leitungen 22 verbunden sind. Die Schaltelemente 21 sind in diesen Ausführungsbeispielen am Magazin 11 jeweils einem Magazinfach 16 räumlich derart zugeordnet, daß sie beim schrittweisen Transport des Magazins 11 in der Magazinführung 12 nur ausgewählte Kontakte 20 berühren.

In dem Projektor 10 gemäß den Fig. 1 und 2 sind die Kontakte 20 als Einzel-Kontaktstellen 23 ausgebildet. Jede Zeitstufe des Zeitbildungsgliedes 17 ist dabei an einem Kontaktstellenpaar 230/231 bzw. 231/232 bzw. 232/233 usw. bis 238/239 angeschlossen und durch leitendes Verbinden des jeweiligen Kontaktstellenpaares einschaltbar.

In Fig. 3 ist das Schaltbild für eine mögliche Ausführungsform eines solchen Zeitbildungsgliedes 17 dargestellt. Das Zeitbildungsglied 17 ist als RC-Glied mit einem Widerstandsnetzwerk 24 ausgebildet. Das Widerstandsnetzwerk 24 besteht aus in Reihe hintereinander-

- 11 -                                        0005817

geschalteten Widerständen 25, deren Widerstandswerte vorzugsweise gegeneinander abgestuft sind. Die Verbindungspunkte 26 der Widerstände 25 sind an den Kontaktstellen 230-239 angeschlossen. Jeweils zwei aufeinanderfolgende Verbindungspunkte 26 bilden den Eingang einer Zeitstufe. In Reihe mit den Widerständen 25 ist der zeitbestimmende Kondensator 27 des RC-Gliedes geschaltet. Die Auflade- oder Entladezeit des RC-Gliedes bestimmt die Projektionszeit und/oder Überblendzeit. Zur Verschiebung der einzelnen Zeitstufen ist parallel zu dem Widerstandsnetzwerk 24 ein manuell einstellbares Potentiometer 28 geschaltet.

Die Schaltelemente 21 am Magazin 11 sind elektrisch leitend ausgebildet, vorzugsweise als Kontaktplatten 29 mit einer dem Abstand der ein Kontaktpaar bildenden Kontakte 230-239 im wesentlichen entsprechenden Länge. Bei der Ausbildung des Zeitbildungsgliedes 17 in der in Fig. 3 dargestellten Weise, nei welchem die Widerstandswerte der einzelnen Widerstände 25 des Widerstandsnetzwerkes 24 gegeneinander abgestuft sind, sind Schaltelemente 21 am Magazin 11 und die Kontaktstellen 23 an der Magazinführungswand 18, also an der Innenfläche 19 der Seitenwand 14 des Projektors 10, räumlich derart zueinander angeordnet, daß beim schrittweisen Magazintransport jedes der Schaltelemente 21 bzw. Kontaktplatten 29 jeweils nur ein einer Zeitstufe zugeordnetes Kontaktpaar 230/231 - 238/239 gleichzeitig berührt. Es ist jedoch auch möglich, das Zeitbildungsglied 17 in Fig. 3 derart auszubilden, daß alle Widerstände 25 den gleichen Widerstandswert aufweisen. In diesen Fällen können die Schaltelemente 21 bzw. die Kontaktplatten 29 am Magazin 11 derart angeordnet werden, daß die Kontaktplatten 29 einen oder mehrere hintereinanderliegende Widerstände 25 gleichzeitig überbrücken.
Auch dadurch erhält das Zeitbildungsglied 17 mehrere verschiedene Zeitstufen.

Die Kontaktstellen 23 sind an der Magazinführungswand 18,
die - wie bereits erwähnt - von der Innenfläche der seitenwand 14 des Projektors 10 gebildet wird, in einer parallel zu der Schmalseite 30 der Magazinfächer 16 verlaufenden Richtung aufgereiht angeordnet. Vorzugsweise sind
die Kontaktstellen 23 vertikal übereinander angeordnet und
die Schaltelemente 21 auf der an der Magazinführungswand
18 entlanggleitenden Außenfläche 31 des Magazins 11 in
einer den ausgewählten Kontakten 23 entsprechenden Höhe
im Bereich des jeweiligen Magazinfachs 16 angeordnet. Bei
einem gemäß Fig. 3 ausgebildeten Zeitbildungsglied 17
sind die ausgewählten Kontakte jeweils ein Kontaktpaar
230/231 bis 238/239, so daß die Kontaktplatten 29 an der
Magazinwand 31 jeweils in einer solchen Höhe angebracht
sind, daß beim Entlanggleiten des Magazins 11 an der Magazinführungswand 18 jeweils eine Kontaktplatte das ausgewählte Kontaktstellenpaar überbrückt. Vorzugsweise sind
die Kontaktstellen 23 in der Diawechselebene 41 des Projektors 10 angeordnet.

Der Projektor gemäß dem Ausführungsbeispiel in den Fig.
1 und 2 arbeitet wie folgt:

Vor der Diavorführung muß das Magazin 11 entsprechend der
für die einzelnen in den Magazinfächern 16 vorhandenen
Dias gewünschten Projektionsdauer vorbereitet, also programmiert werden. Beispielsweise aus der Gebrauchsanleitung für den Projektor weiß der Bedienende, welche Kontaktstellen 23 miteinander verbunden werden müssen, um
eine bestimmte Projektionsdauer zu erzielen. An der Seitenwand 31 des Magazins 11 wird nunmehr jeweils an der Schmalseite 30 eines Magazinfaches 16 eine elektrisch leitende Kontaktplatte 29 in einer solchen Höhe angebracht, daß sie beim Vorbeigleiten an den Kontaktstellen 23 die beiden ausgewählten Kontaktstellen 23 miteinander verbindet. Immer dann, wenn das zu projizierende Dia in der Diawechselebene 41 liegt, verbindet die diesem Magazinfach 16 zugeordnete Kontaktplatte 29 die entsprechenden Kontaktpaare. Damit wird in dem Zeitbildungsglied eine bestimmte RC-Kombination eingestellt, welche die Projektionsdauer bestimmt.

In gleicher Weise kann auch die individuelle Überblendzeit jedes Dias gesteuert werden. An dem Zeitbildungsglied 17 muß dann lediglich die Steuerschaltung für die Überblendeinrichtung angeschlossen sein. Es ist auch möglich, die Überblendzeit und die Projektionszeit eines einzigen Dias gleichzeitig zu steuern. In diesem Fall kann auch hier - wie in Fig. 5 dargestellt - ein Teil der Kontaktstellen 23 mit einem Zeitbildungsglied 17 zum Steuern der Projektionszeit und der andere Teil der Kontaktstellen 23 mit einem Zeitbildungsglied 17' zum Steuern der Überblendzeit verbunden sein.

Bei dem Projektor 10 gemäß dem Ausführungsbeispiel in Fig. 4 ist das Zeitbildungsglied 17 bzw. 17' ebenfalls als RC-Glied ausgebildet. Dieses Zeitbildungsglied kann aber nur eine einzige feste Zeit steuern, wenn diese auch möglicherweise manuell veränderbar ist. Die Kontakte 20 bestehen wiederum aus einzelnen, an der Magazinführungswand 18 frei zugänglichen Kontaktstellen 23. Je eine Kontaktstelle 23 ist mit je einem Anschluß 37 des Widerstandes 38 des RC-Gliedes 39 verbunden.

In Fig. 4 sind zwei Zeitbildungsglieder 17 bzw. 17' vorgesehen, wovon das eine Zeitbildungsglied 17 die Projektionszeit und das andere Zeitbildungsglied 17' die Überblendzeit steuert. Die Zeitbildungsglieder 17 und 17'
sind identisch aufgebaut. Jedes Zeitbildungsglied 17
bzw. 17' ist also mit zwei der Einzel-Kontaktstellen
23 verbunden.

Die Schaltelemente 21 am Magazin 11 sind als am Magazin
11 anbringbare Widerstandsstreifen 40 bzw. 40' ausgebildet. Die Widerstandsstreifen 40 sind dabei den mit dem
Zeitbildungsglied 17 verbundenen Kontaktstellen 23 und
die Widerstandsstreifen 40' den mit dem Zeitbildungsglied 17' verbundenen beiden Kontaktstellen 23 zugeordnet. Die Widerstandsstreifen 40 bzw. 40' sind alle gleich
ausgebildet und derart bemessen und angeordnet, daß ein
Widerstandsstreifen 40 bzw. 40' jeweils die beiden einem
Zeitbildungsglied 17 bzw. 17' zugeordneten Kontaktstellen 23 überbrückt. Die Widerstandsstreifen 40 bzw. 40'
sind auf das Magazin 11, und zwar hier wiederum auf die
Seitenwand 31 in entsprechender Zuordnung zu den Magazinfächern 16, aufklebbar ausgebildet. Die Widerstandswerte der Widerstandsstreifen 40 bzw. 40' sind entsprechend der gewünschten Projektionszeit bzw. Überblendzeit gewählt. Die Kontaktstellen 23 sind wieder zu der
Magazinführungswand 18 parallel zur Schmalseite 30 der
Magazinfächer 16, vorzugsweise in der Diawechselebene
41 und vertikal übereinanderliegend, ausgerichtet.

Die Funktionsweise dieses Projektors 10 ist wie folgt:
Entsprechend der gewünschten Projektionszeit und/oder
Überblendzeit eines Dia wird ein die entsprechende Zeitangabe tragender Widerstandsstreifen 40 und/oder 40'
auf die Außenwand 31 des Magazins 11 aufgeklebt, und
zwar an der Schmalseite 30 desjenigen Magazinfaches 16,
das dieses Dia enthält. In gleicher Weise werden die
übrigen Schmalseiten 30 der Magazinfächer 16 mit solchen
Widerstandsstreifen bestückt. Gelangt nunmehr dasjenige

Dia, dessen Projektionszeit und/oder Überblendzeit gesteuert werden soll, in die Diawechselebene 41 des Projektors 10, so überbrücken die Widerstandsstreifen 40 und/oder 40' die dem Zeitbildungsglied 17 und/oder 17' zugeordneten Kontaktstellen 23. Damit ist dem Widerstand 38 des RC-Gliedes 39 der Widerstandsstreifen 40 bzw. 40' parallel geschaltet. Die Zeitkonstante des Zeitbildungsgliedes 17 bzw. 17' ändert sich in der gewünschten Weise, und die Projektionszeit und/oder Überblendzeit für das jeweilige Dia ist eingestellt. Dieser Vorgang wiederholt sich beim schrittweisen Transport des Magazins 11 längs der Magazinführung 12 jeweils dann, wenn das nächstfolgende Magazinfach 16 mit dem zu projizierenden Dia in die Diawechselebene 41 gelangt.

Der Vorteil des Projektors gemäß dem Ausführungsbeispiel in Fig. 4 liegt darin, daß bereits vorhandene Zeitbildungsglieder 17 bzw. 17' im Projektor 10 verwendet werden können. Lediglich dem Widerstand 38 des als RC-Glied ausgebildeten Zeitbildungsgliedes 17 bzw. 17' ist ein aus zwei an der Magazinführungswand 18 frei zugänglichen Kontaktstellen 23 bestehendes Kontaktpaar parallel zu schalten. Bereits vorhandene Projektoren können daher leicht nachträglich umgerüstet werden. Ein weiterer Vorteil liegt darin, daß keine besonderen Magazine 11 verwendet werden müssen. Herkömmliche Diamagazine können ohne Schwierigkeiten mit solchen Kontaktstreifen beklebt werden, die jederzeit auch wiederverwendbar von dem Magazin 11 abgezogen werden können.

Die Erfindung ist nicht auf die vorstehend beschriebenen Ausführungsbeispiele beschränkt. Insbesondere können die hier verwendeten Zeitbildungsglieder 17, 17' verschiedenartig ausgebildet sein. So kann beispielsweise ein Zeitbildungsglied auch von einer Zählerkette gebildet werden, deren einzelne Zählstufen über die in der Magazinführungswand 18 frei zugänglichen Kontakte 20 ansteuerbar
sind.

0005817

ROLLEI - WERKE

Franke & Heïdecke                                        04.05.1979

Braunschweig


A 1127 Eu


Patentansprüche


1. Stehbild-Projektor mit einem zu projizierende Dias enthaltenden Magazin, einer das Magazin aufnehmenden Magazinführung und mit mindestens einem Zeitbildungsglied zum Bestimmen der Projektionszeit der Dias und/oder Überblendzeit beim Diawechsel, d a d u r c h   g e k e n n z e i c h n e t, daß an einer dem Magazin (11) unmittelbar zugekehrten Wand (18) der Magazinführung (12) mit dem Zeitbildungsglied (17, 17') verbundene elektrische Kontakte (20) vorgesehen sind, daß am Magazin (11) beim Magazintransport aufeinanderfolgend die Kontakte (20) betätigende Schaltelemente (21) vorgesehen sind und daß die Schaltelemente (21) den Magazinfächern (16) derart zugeordnet sind, daß durch Betätigen mindestens eines Kontaktes (20) durch ein Schaltelement (21) die für das in dem diesem Schaltelement (21) zugeordneten Magazinfach (16) enthaltene Dia gewählte Projektions- und/oder Überblendzeit in dem Zeitbildungsglied (17, 17') eingestellt wird.


2. Projektor nach Anspruch 1, d a d u r c h   g e k e n n z e i c h n e t,   daß das Zeitbildungsglied (17) eine Vielzahl von Zeitstufen aufweist, die mit den Kontakten (20) verbunden sind, und daß die Schaltelemente (21) am Magazin (11) den Magazinfächern (16) räumlich derart zugeordnet sind, daß sie beim Magazintransport nur ausgewählte Kontakte (20) betätigen.

3. Projektor nach Anspruch 2, d a d u r c h g e -
k e n n z e i c h n e t , daß die Kontakte (20) als
Einzel-Kontaktstellen (23) ausgebildet sind, und
daß jede Zeitstufe an einem Kontaktstellenpaar angeschlossen und durch elektrisches Verbinden des
jeweiligen Kontaktstellenpaares einschaltbar ist.

4. Projektor nach Anspruch 3, d a d u r c h g e -
k e n n z e i c h n e t , daß das Zeitbildungsglied (17) als RC-Glied mit einem Widerstandsnetzwerk (24) ausgebildet ist und daß die Verbindungspunkte (26) der Widerstände (25) an den Kontaktstellen (23) angeschlossen sind.

5. Projektor nach Anspruch 3 oder 4, d a d u r c h
g e k e n n z e i c h n e t , daß die Schaltelemente (21) elektrisch leitend ausgebildet und Kontaktstellen (23) und Schaltelemente (21) räumlich
derart zueinander angeordnet sind, daß beim Magazintransport jedes der Schaltelemente (21) jeweils nur
ein einer Zeitstufe zugeordnetes Kontaktstellenpaar
(23) gleichzeit berührt.

6. Projektor nach Anspruch 5, d a d u r c h g e -
k e n n z e i c h n e t , daß die Schaltelemente
(21) als Kontaktplatten (29) mit einer dem Abstand
der beiden ein Kontaktstellenpaar bildenden Kontaktstellen (23) im wesentlichen entsprechenden Länge
ausgebildet ist und daß die Kontaktstellen (23) an
der Magazinführungswand (18) in einer prallel zur

- 19 -    0005817

Schmalseite (30) der Magazinfächer (16) verlaufenden Richtung vertikal übereinander aufgereiht angeordnet sind.

7. Projektor nach Anspruch 1, d a d u r c h   g e -k e n n z e i c h n e t,  daß das Zeitbildungs-glied (17, 17') als RC-Glied (39) ausgebildet ist, daß die Kontakte (20) aus Einzel-Kontaktstellen (23) bestehen, von denen je eine mit je einem Anschluß (37) des Widerstandes (387 des RC-Gliedes (39) verbunden ist, und daß die Schaltelemente (21) als am Magazin (11) anbringbare Widerstandsstreifen (40, 40') ausgebildet sind, die derart bemessen und angeordnet sind, daß ein Widerstandsstreifen (40, 40') jeweils die mit dem Widerstand (38) verbundenen beiden Kontaktstellen (23) gleichzeitig berührt.

8. Projektor nach Anspruch 7, d a d u r c h   g e -k e n n z e i c h n e t,  daß die Widerstandsstrei-fen (40, 40') auf dem Magazin (11) aufklebbar ausgebildet sind.

9. Projektor nach Anspruch 8, d a d u r c h   g e -k e n n z e i c h n e t,  daß die Kontaktstellen (23) an der Magazinführungswand (18) parallel zur Schmalseite (30) der Magazinfächer (16) ausgerichtet sind und daß die Widerstandsstreifen (40, 40') auf der an der Magazinführungswand (18) entlanggleitenden Außenfläche (31) des Magazins (11) im Bereich des jeweiligen Magazinfachs (16) angeordnet sind.

10. Projektor nach einem der Ansprüche 9, d a d u r c h   g e k e n n z e i c h n e t,  daß die Kontaktstel-len (23) bzw. Schaltkontakte (32) in der Diawechsel-ebene (41) angeordnet sind.

Fig. 1

Fig. 2

Fig. 3

Fig. 4

**Europäisches Patentamt**

# EUROPÄISCHER RECHERCHENBERICHT

EP 79 101 637.1

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 356 969 (DANEL et al.)<br>* Ansprüche; Fig. 1 bis 3 *<br>-- | 1 |
| X | DE - A - 1 547 471 (WEBER)<br>* Ansprüche, Seite 2; Fig. 1,2 *<br>-- | 1 |
| | DE - A - 2 435 292 (ROLLEI)<br>* Anspruch 1; Fig. 1 *<br>-- | 1 |
| A | DE - U - 1 951 699 (VOIGTLAENDER)<br>* Anspruch 1 *<br>-- | |
| A | AT - B - 282 999 (VOIGTLAENDER)<br>* Fig. 1 bis 9 *<br>-- | |
| A | US - A - 3 632 199 (PETERSON)<br>* Fig. *<br>---- | |

**KLASSIFIKATION DER ANMELDUNG (Int.Cl.²)**

G 03 B 23/02

**RECHERCHIERTE SACHGEBIETE (Int. Cl.²)**

G 03 B 23/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 06-09-1979 | HOPPE |

EPA form 1503.1  06.78